# EUROPÄISCHE PATENTANMELDUNG

(11) **EP 0 983 895 A2**
(43) Veröffentlichungstag der Anmeldung: **08.03.2000**
(21) Anmeldenummer: 99103768.0
(22) Anmeldetag: 26.02.1999
(51) Int. Cl.: B60N 2/44

(54) **Schonbezüge, universal passend für Kraftfahrzeugsitze mit integriertem Airbag**

(30) Priorität: 31.08.1998 DE 19839539; 31.08.1998 DE 29815531 U
(71) Anmelder: ACTIVLINE Autozubehör GmbH & Co. KG, 55469 Simmern/Hsr. (DE)
(72) Erfinder: Siefarth, Lothar, 55499 Riesweiler (DE)
(74) Vertreter: Weiss, Ursula, Dr.

(57) **Zusammenfassung**

Der Schonbezug für Kraftfahrzeugsitze umfaßt ein Sitz- und Rückenlehnenteil und weist in der Längsseite des Rückenlehnenteils eine Sollbruchstelle auf, die durch die Entfaltung eines in dem Sitz integrierten Airbags aufgebrochen wird und eine Öffnung freigibt, durch die der sich entfaltende Airbag hindurchtreten kann. Der Schonbezug ist dadurch gekennzeichnet, daß (1) eine Rückenlehnenlängsseite von zwei sich überlappenden Zuschnitteilen gebildet wird, von denen das eine an dem zur Lehnenvorderseite weisenden Seitenrand mit dem Zuschnitt für das Lehnenvorderteil verbunden und an dem zur Lehnenrückseite weisenden Seitenrand offen und das andere an dem zum Lehnenrückenteil weisenden Seitenrand mit dem Zuschnitt für das Lehnenrückenteil verbunden und an dem zum Lehnenvorderteil weisenden Seitenrand offen ist, daß (2) das innere Zuschnitteil elastisch und das äußere weitgehend unelastisch ausgebildet ist, und daß (3.) die Sollbruchstelle eine Ausnehmung an dem offenen Seitenrand des äußeren Zuschnitteils ist mit einer Abdeckung, die an ihrem von dem offenen Seitenrand wegweisenden Rand an dem Zuschnitteil befestigt ist und im Bereich ihrer dem offenen Seitenrand zugewandten Ränder Haftmittel aufweist, die mit komplementär wirkenden Haftmittel an der Oberfläche des Zuschnitteils zusammenwirken.

## Beschreibung

Die Erfindung betrifft einen Schonbezug für Kraftfahrzeugsitze mit Sitzteil und Rückenlehnenteil, wobei an dem Rückenlehnenteil im Bereich einer oder beider Lehnenlängsseiten wenigstens eine Sollbruchstelle ausgebildet ist, die durch die Entfaltung eines in dem Sitz integrierten Airbags aufgebrochen wird und eine Öffnung freigibt, durch die der sich entfaltende und sich aufblasende Airbag ungehinderten hindurchtreten und seine Schutzwirkung entfalten kann.

Schonbezüge für Autositze dienen verschiedenen Zwecken: Sie verzögern die Abnutzung des ursprünglichen, mit dem Autositz fest verbundenen Sitzbezugs; sie bieten dem jeweiligen Autohalter bzw. Autofahrer die Möglichkeit, Material und Farbe der Sitzbezüge nach seinen individuellen Wünschen zu wählen und jederzeit beliebig wieder zu ändern, und sie bieten aufgrund der vielfältigen Wahlmöglichkeiten bezüglich Material und Verarbeitungstechnik einen erhöhten Sitzkomfort, der auf die individuellen Bedürfnisse des jeweiligen Fahrers abgestimmt werden kann. Dies sind einige Gründe dafür, daß Schonbezüge für Autositze ein viel gefragter Artikel sind.
Mit der technischen Weiterentwicklung der Kraftfahrzeuge werden auch immer wieder neue Anforderungen an derartige Schonbezüge gestellt. So besteht derzeit das Problem, das ein neues Airbagsystem für Kraftfahrzeugen entwickelt wurde, das in den Lehnenlängsseiten der Kraftfahrzeugsitze angeordnet ist. In der Regel ist dieser 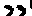 Seiten-Airbag" in einer flachen, taschenförmigen Aussparung des Rückenpolsters der Kraftfahrzeugsitze eingearbeitet. Die Taschenöffnung ist mit einer Naht verschlossen, die relativ leicht zum aufplatzten gebracht werden kann. Bei Bedarf, d.h. in der Regel bei einem Unfall, wird diese Naht durch den sich durch den Pressdruck des sich aufblasenden und sich entfaltenden Airbags aufgerissen und der Airbag kann heraustreten, um seine Pufferfunktion/Auffangfunktion auszuüben.
Bei den herkömmlichen Schonbezügen sind die Stoffzuschnitten üblicherweise an den Stoßkanten mit maschinell gefertigten Nähten geschlossen, die ein Hindurchtreten eines Airbags nicht erlauben. Diese herkömmlichen Schonbezüge sind folglich für Autositze mit integriertem Airbag nicht geeignet.

In der jüngst veröffentlichten Gebrauchsmusterschrift 297 07 182 ist erstmals ein Schonbezug beschrieben, der an einer oder beider Längsseiten des Rückenlehnenteils im Bereich der den integrierten Airbag enthaltenden Tasche einen verschließbaren Öffnungsschlitzes aufweist, der als Sollbruchstelle wirkt. Der Öffnungsschlitz ist an seinen Schlitzkanten mit Haftmitteln versehen, die den Schlitz im Normalzustand geschlossen halten, und liegt bei vorschriftsmäßigem Einsatz des Schonbezugs über der Öffnung(snaht) der den Airbag enthaltenden Tasche. Im Fall einer Entfaltung des Airbags wird der Öffnungsschlitz infolge der Druckkraft des sich aufblasenden und entfaltenden Airbags aufgebrochen, und läßt den hinausdrängenden Airbag ungehindert passieren. Dieser Schonbezug erfüllt die grundsätzlichen Anforderungen an einen Schonbezug für Kraftfahrzeugsitze mit integriertem Airbag im wesentlichen zufriedenstellend. Ein Problem besteht jedoch darin, daß nicht genau vorhergesagt werden kann, an welcher Stelle und in welchem Umfang die den Airbag enthaltende Tasche bei einer Aktivierung des Airbags aufreißt. Wenn sich die tatsächliche Rißstelle nicht direkt unterhalb des Öffnungsschlitzes in dem Schonbezug befindet, muß sich der austretende Airbag erst seinen Weg dorthin suchen, und das kann seine Schutzfunktion u.U. erheblich beeinträchtigen. Wenn man aber den Öffnungsschlitz über eine Länge ausbildet, die der der Airbagtasche bzw. deren Öffnungsnaht entspricht, d.h. in der Praxis über nahezu die gesamte Länge der Lehnenlängsseite, besteht das Problem, daß insbesondere beim Ein- und Aussteigen in das Kraftfahrzeug infolge der dabei auftretenden Zug- und Dehnbeanspruchung des Schonbezug so starke Zugkräfte auf den Öffnungsschlitz ausgeübt werden, daß die dort ausgebildeten Haftmittel nachgeben und sich der Schlitz öffnet. Damit verliert der Schonbezug wesentlich an Formstabilität und dekorativer Wirkung.

Der vorliegenden Erfindung liegt nun die Aufgabe zugrunde, einen Schonbezug für Kraftfahrzeugsitze mit integriertem Airbag in der Rückenlehne derart weiterzubilden, daß die genannten Nachteile vermieden sind.

Eine Lösung dieser Aufgabe besteht in der Bereitstellung eines Schonbezugs der eingangs genannten Art, der dadurch gekennzeichnet ist, daß wenigstens eine Rückenlehnenlängsseite von zwei sich überlappenden Zuschnitteilen gebildet wird, die beide an ihrem zur Lehnenoberseite weisenden kurzen Seitenrand mit dem/den angrenzenden Zuschnitteil(en) für die Lehnenoberseite verbunden sind. Das eine Zuschnitteil ist an seinem zur Lehnenvorderseite weisenden langen Seitenrand mit dem dort angrenzenden Zuschnitt für das Lehnenvorderteil verbunden und an seinem zur Lehnenrückseite weisenden langen Seitenrand offen, und das andere Zuschnitteil ist an seinem zum Lehnenrückenteil weisenden langen Seitenrand mit dem dort angrenzenden Zuschnitt für das Lehnenrückenteil verbunden und an seinem zum Lehnenvorderteil weisenden langen Seitenrand offen. Das innere, dem Rückenlehnenteil anliegende Zuschnitteil ist elastisch und das äußere, überlappende, dem Rückenlehnenteil allenfalls bereichsweise anliegende Zuschnitteil ist weitgehend unelastisch ausgebildet. Die Sollbruchstelle ist realisiert als Ausnehmung, dieweiche an dem offenen langen Seitenrand dieses äußeren Zuschnitteils ausgebildet ist und eine Abdeckung aufweist, die an ihrem von dem offenen langen Seitenrand wegweisenden Längsrand an dem Zuschnitteil befestigt ist, und die im Bereich ihrer dem offenen langen Seitenrand zugewandten Längs- und/oder den Seitenrand/Seitenränder Haftmittel aufweist, denen komplementär wirkende Haftmittel an entsprechender Stelle an der Oberfläche des Zuschnitteils zugeordnet sind.

Der erfindungsgemäße Schonbezug ermöglicht somit die Beibehaltung einer formstabilen, verrutschsicheren Paßform unter gleichzeitiger Gewährleistung eines ungehinderten Durchtritts für einen sich entfaltenden und sich aufblasenden Airbag. Er bietet außerdem den Vorteil, daß er aus praktisch sämtlichen bekannten Materialien und unter Verwendung der bekannten Zuschnitte für Schonbezüge hergestellt werden kann. Selbst Jerseystoffe sind beispielsweise problemlos einsetzbar.

Das äußere Zuschnitteil ist vorzugsweise aus weitgehend unelastischem Material gefertigt und/oder mit unelastischem oder wenig elastischem Material unterfüttert. Mit dieser Maßnahme wird die Wirkung der Ausnehmung als Sollbruchstelle vorteilhaft erhöht, indem das betreffende Zuschnitteil des Lehnenlängsseite dem austretenden Airbag relativ starken Widerstand entgegensetzt, und so dessen Weg durch die vorzugsweise rundliche oder ovale Ausnehmung fördert. Gleichzeitig wird mit dieser Aussteifung die Formstabilität des Schonbezugs insbesondere an der betreffenden Lehnenlängsseite unterstützt.
Alternativ, insbesondere aber auch ergänzend kann das äußere Zuschnitteil an seinem offenen langen Seitenrand mit einer zusätzlichen Versteifung versehen sein, beispielsweise mit einer Gummilitze, die entlang dieses Seitenrands ausgebildet ist. Eine solcherart angeordnete Gummilitze hat überdies den Vorteil, daß sie zum einen das betreffende äußere Zuschnitteil an diesem Seitenrand rafft und zum anderen an der anliegenden Oberseite des inneren Zuschnitteils über Reibungskräfte haftet und damit einem Verrutschen der sich überlappenden Zuschnitteile in zweifacher Weise entgegenwirkt.

In einer herstellungs- und handhabungstechnisch vorteilhaft einfachen Ausführungsform der Erfindung sind die Haftmittel als Klettband/Klettpads und Flauschband/Flauschpads realisiert. Andere komplementär wirkende Haftmittel sind aber ebensogut einsetzbar, ohne den Kern der Erfindung zu verändern, beispielsweise Klebepunkte oder Steckverbindung Steckverbindungen.

Die Erfindung wird im folgenden anhand von in den Zeichnungen dargestellten Ausführungsbeispielen näher erläutert. Es zeigen
- Fig. 1:: einen Zuschnitt für einen erfindungsgemäßen Schonbezug
- Fig. 2:: die Seitenansicht der Rückenlehne eines Kraftfahrzeugsitzes mit erfindungsgemäßem Schonbezug
- Fig. 3:: eine Detailansicht der Sollbruchstelle des Schonbezugs gemäß Fig. 2
- Fig. 4:: einen Querschnitt gemäß Fig. 2 von III nach III durch die Rückenlehne im Bereich der (geschlossenen) Sollbruchstelle, und
- Fig. 5:: einen Querschnitt gemäß Fig. 2 von IV nach IV durch die Rückenlehne im Bereich der (geschlossenen) Sollbruchstelle.

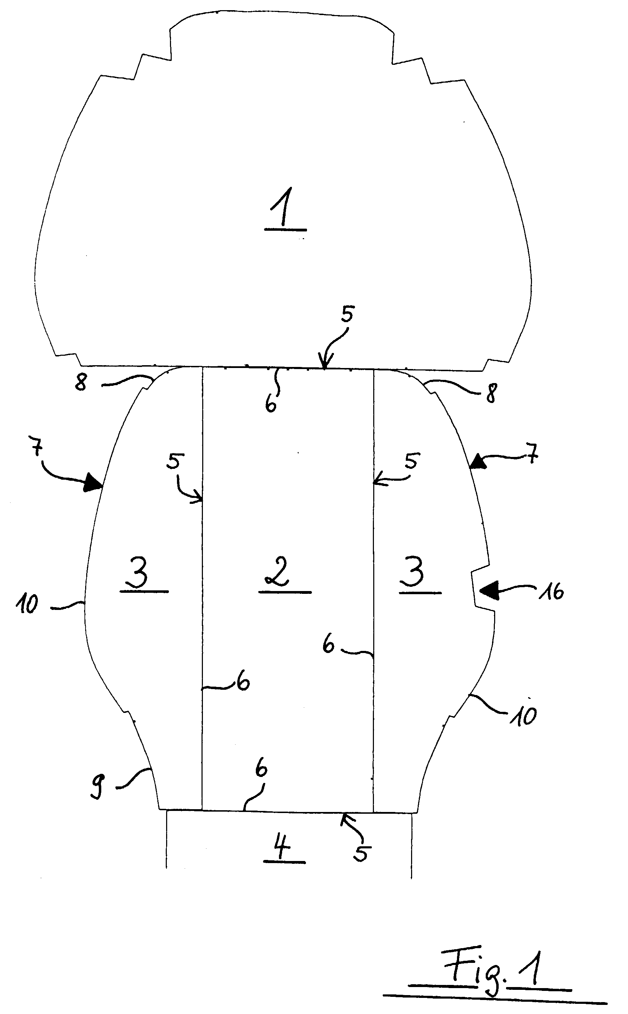

Der Zuschnitt gemäß Fig. 1 umfaßt ein Rückenteil 1, das so bemaßt ist, daß es die Lehnenrückseite 10 und die Lehnenlängsseite 13 bedecken kann, ein Vorderteil 2, zwei Längsseitenteile 3 und ein Sitzteil 4, das hier nur im Ansatz dargestellt ist.

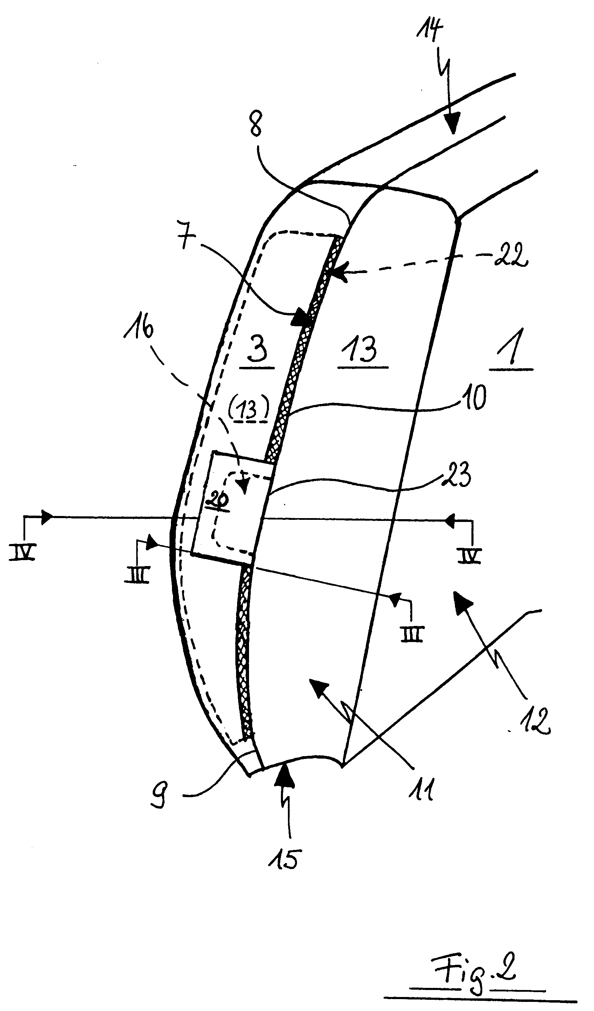

Im bezugsfertigen Zustand - dargestellt in Fig. 2 - sind das Rückenteil 1, die beiden Seitenteile 3 und das Sitzteil 4 jeweils an ihrer an das Vorderteil 2 grenzenden Stoßkante 5 mit diesem Vorderteil 2 verbunden, entweder über eine Naht 6 oder durch einstückige Ausbildung (einstückiges Ausschneiden aus dem Bezugsmaterial). Die beiden (Längs-) Seitenteile 3 sind an ihrer zum Rückenteil 1 hinweisenden Stoßkante 7 jeweils nur im Bereich der beiden Endabschnitte 8, 9 dieser Stoßkante 7 mit dem Rückenteil 1 verbunden, der dazwischen liegende mittlere Abschnitt 10 ist frei.
An der Längsseite 11 des Kraftfahrzeugsitzes überlappt das Seitenteil 3 den die Lehnenrückseite 12 an dieser Seite überkragenden Abschnitt 13 des Rückenteils 1. Dabei liegt der Abschnitt 13 des Rückenteils 1 innen bzw. zuunterst und damit dem Kraftfahrzeugsitz direkt an, und das Seitenteil 3 liegt außen bzw. oben. Zur Fixierung der Überlappung ist das Seitenteil 3 an seiner zum Rückenteil 1 hinweisenden Stoßkante 7 im Bereich der beiden Endabschnitte 8, 9, d.h. in dem an die Lehnenoberseite 14 und in dem an die Lehnenunterseite 15 angrenzenden Endabschnitten 8, 9 mit dem darunter befindlichen Abschnitt 13 des Rückenteils 1 fest verbunden, vorzugsweise vernäht. Der mittlere Abschnitt 10 der Stoßkante 7 des Seitenteils 3 ist frei. Das Seitenteil 3 ist erfindungsgemäß weitgehend unelastisch ausgebildet, z.B. aus weitgehend unelastischem Material gefertigt und/oder mit einem solchen Material unterfüttert und/oder auf sonstige Weise weitgehend unelastisch ausgerüstet. Seine Stoßkante 7 ist vorzugsweise zusätzlich versteift, beispielsweise durch Anordnung einer Gummilitze 22 entlang dieser Kante. Oberhalb der Sollbruchstelle in der Lehnenlängsseite 11, aus der gegebenenfalls der integrierte Airbag austritt, weist das Seitenteil 3 eine Ausnehmung 16 auf. Diese Ausnehmung 16 ist mit einer Abdeckung 20 versehen, die die Ausnehmung 16 an ihren beiden von der Stoßkante 7 in Richtung Vorderteil 2 abgehenden Breitseiten 17, 18, an der diese verbindenden und annähernd parallel zur Stoßkante 7 verlaufenden Längsseite 19 und im Bereich der gedachten (imaginären) Stoßkante 7 überkragt.

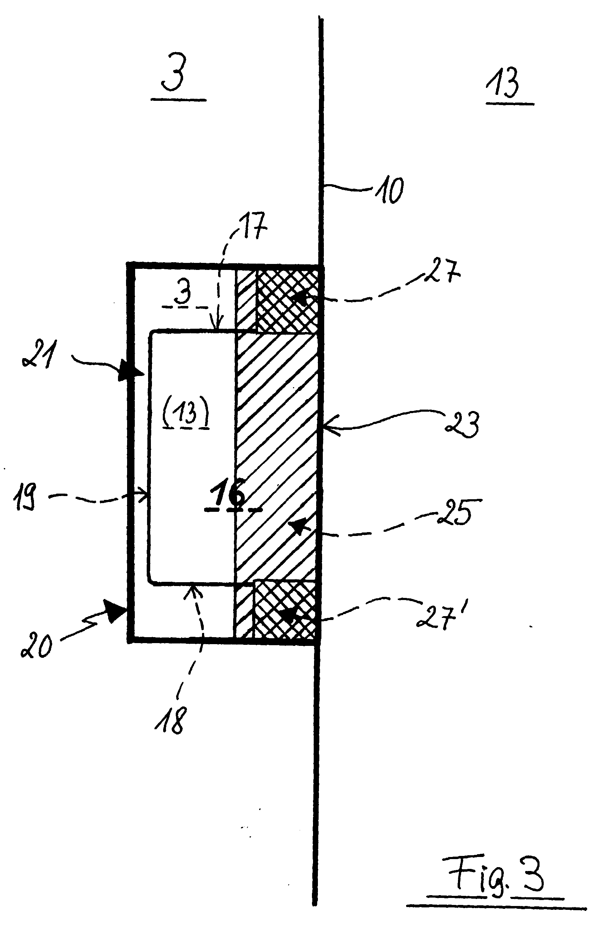

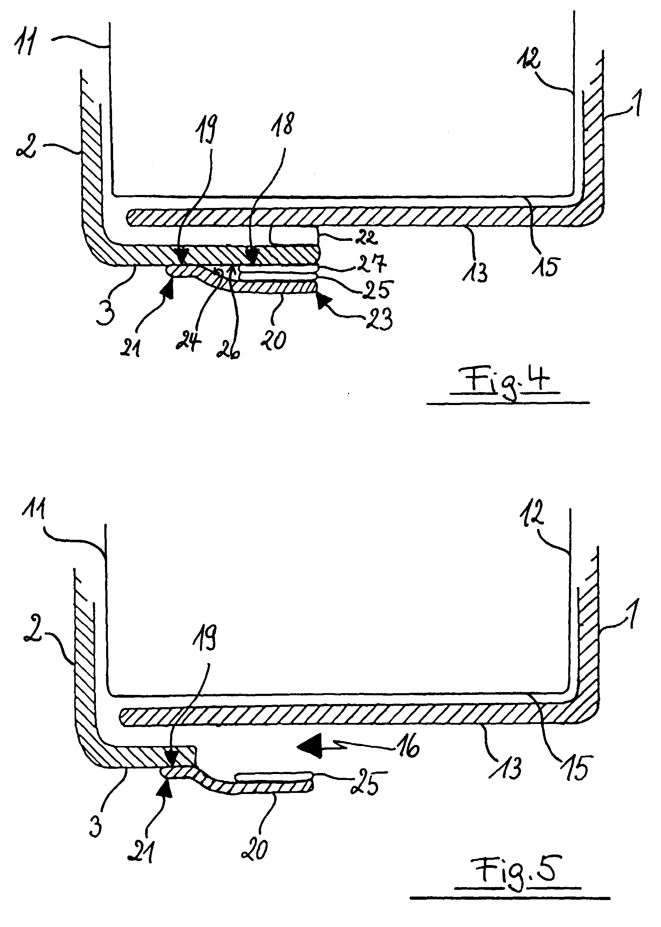

Wie in Fig. 3 bis 5 näher dargestellt ist diese Abdeckung an ihrem von der Stoßkante 7 wegweisenden, geschlossenen Längsrand 21 an dem Seitenteil 3 befestigt, vorzugsweise mit diesem vernäht. An der gegenüberliegenden, der Stoßkante 7 zugewandten Seitenrand 23 weist die Abdeckung 20 an ihrer der Ausnehmung 16 zugewandten Unterseite 24 einen Klettbandstreifen 25 auf, der mit zwei Flauschpads 27, 27' als komplementäre Haftmittel zusammenwirkt, die an der Oberfläche 26 des Seitenteils 3 im Randbereich der beiden Breitseiten 17,18 angeordnet sind.
Anstelle von Klebestreifen und Flauschpads kommen selbstverständlich auch andere zusammenwirkende Haftmittel in Betracht.

### Bezugszeichen

- 1: Rückenteil
- 2: Vorderteil
- 3: Seitenteil
- 4: Sitzteil
- 5: Stoßkante
- 6: Naht
- 7: Stoßkante
- 8: Endabschnitt
- 9: Endabschnitt
- 10: mittlerer Abschnitt
- 11: (Lehnen-)Längsseite
- 12: Lehnenrückseite
- 13: Abschnitt d. Rückenteils
- 14: Lehnenoberseite
- 15: Lehnenunterseite
- 16: Ausnehmung
- 17: Breitsseite
- 18: Breitseite
- 19: Längsseite
- 20: Abdeckung
- 21: Längsrand
- 22: Gummilitze
- 23: Seitenrand
- 24: Unterseite
- 25: Klettbandstreifen
- 26: Oberfläche
- 27: Flauschpad

## Patentansprüche

1. Schonbezug für Kraftfahrzeugsitze mit Sitzteil und Rückenlehnenteil, wobei das Rückenlehnenteil im Bereich der Rückenlehnenlängsseiten wenigstens eine Sollbruchstelle aufweist, die durch Entfaltung eines in dem Sitz integrierten Airbags aufbrechbar ist und eine Öffnung freigibt, die von dem sich entfaltenden und sich aufblasenden Airbag ungehinderten passierbar ist, dadurch gekennzeichnet,
daß wenigstens eine Rückenlehnenlängsseite von zwei sich überlappenden Zuschnitteilen gebildet wird, die beide an ihrem zur Lehnenoberseite weisenden kurzen Seitenrand mit dem/den angrenzenden Zuschnitteil(en) für die Lehnenoberseite verbunden sind, und von denen das eine an seinem zur Lehnenvorderseite weisenden langen Seitenrand mit dem Zuschnitt für das Lehnenvorderteil verbunden und an seinem zur Lehnenrückseite weisenden langen Seitenrand offen und das andere an seinem zum Lehnenrückenteil weisenden langen Seitenrand mit dem Zuschnitt für das Lehnenrückenteil verbunden und an seinem zum Lehnenvorderteil weisenden langen Seitenrand offen ist,
daß das innere, dem Rückenlehnenteil anliegende Zuschnitteil elastisch und das äußere, überlappende Zuschnitteil weitgehend unelastisch ausgebildet ist,
und daß die Sollbruchstelle eine Ausnehmung an dem offenen langen Seitenrand dieses äußeren Zuschnitteils ist, welche eine Abdeckung aufweist, die an ihrem von dem offenen langen Seitenrand wegweisenden Längsrand an dem Zuschnitteil befestigt ist, und die im Bereich ihrer dem offenen langen Seitenrand zugewandten Längs- und/oder den Seitenrand/Seitenränder Haftmittel aufweist, die mit komplementär wirkenden Haftmittel zusammenwirken, die an entsprechender Stelle an der Oberfläche des Zuschnittels ausgebildet sind.

2. Schonbezug nach Anspruch 1, dadurch gekennzeichnet,
daß das äußere Zuschnitteil aus weitgehend unelastischem Material gefertigt und/oder mit unelastischem oder wenig elastischem Material unterfüttert ist.

3. Schonbezug nach Anspruch 1 oder 2, dadurch gekennzeichnet,
daß das äußere Zuschnitteil an seinem offenen langen Seitenrand versteift und gerafft ist, vorzugsweise durch Anordnung einer Gummilitze entlang dieses Rands.

4. Schonbezug nach einem der Ansprüche 1 bis 3, dadurch gekennzeichnet,
daß die zusammenwirkenden Haftmittel als Klettband/Klettpads und Flauschband/Flauschpads realisiert sind.

5. Schonbezug nach einem der Ansprüche 1 bis 3, dadurch gekennzeichnet,
daß als zusammenwirkende Haftmittel Klebepunkte ausgebildet sind.

6. Schonbezug nach einem der Ansprüche 1 bis 3, dadurch gekennzeichnet,
daß die zusammenwirkenden Haftmittel als Steckverbindung realisiert sind.
